# EUROPÄISCHE PATENTSCHRIFT

(11) **EP 0 723 878 B1**
(45) Veröffentlichungstag und Bekanntmachung des Hinweises auf die Patenterteilung: **17.03.1999**
(21) Anmeldenummer: 95110183.1
(22) Anmeldetag: 29.06.1995
(51) Int. Cl.: B42D 15/10

(54) **Folientasche zur Aufnahme eines Dokumentes**
Folder for a document
Pochette pour un document

(30) Priorität: 26.01.1995 DE 19502418
(43) Veröffentlichungstag der Anmeldung: 31.07.1996
(73) Patentinhaber: topac MultimediaPrint GmbH, 33311 Gütersloh (DE)
(72) Erfinder: Deutschmann, Sven, D-33829 Borgholzhausen (DE)
(74) Vertreter: Prietsch, Reiner, Dipl.-Ing.

(56) Entgegenhaltungen:
- EP-A- 0 440 045

## Beschreibung

Die Erfindung betrifft eine Folientasche zur Aufnahme und nachfolgenden Einlaminierung eines Dokumentes, z.B. eines Ausweisdokumentes, zwischen zwei über einen Falz verbundene, die Tasche bildende Folienblätter aus einem transparenten, thermoplastischen Kunststoff. Eine derartige Folientasche ist aus der US-PS 3 221 428 bekannt.

Solche Folientaschen dienen dem Schutz des einlaminierten oder eingesiegelten Dokumentes nicht nur vor äußeren Einflüssen sondern auch vor Manipulationen der gewöhnlich personenbezogenen Daten und anderer Echtheitsmerkmale (wie Foto und/oder Unterschrift) auf dem Dokument. Das Dokument besteht in der Regel aus Papier und ist als sog. Papier-Inlay einige Millimeter kleiner bemessen als die Folientasche. Diese besteht ihrerseits aus einer wenigstens einschichtigen Folie aus z.B. PE, PP, PS, PVC, PET usw. mit einer im allgemeinen zwischen 60 und 80° C liegenden Erweichungstemperatur. Der zunächst lose Gesamtverbund aus der Folientasche und dem zwischen die beiden Folienblätter eingefügten Papier-Inlay durchläuft dann einen sog. Rollenlaminator, dessen auf ca. 130° C erhitzten Walzen die Folienblätter an ihren Rändern gegen sich selbst und im übrigen gegen die Fläche der Papier-Inlays verschweißen.

Während nun die Manipulation eines in dieser Weise einlaminierten Dokumentes relativ schwierig ist, ist eine Komplettfälschung um so einfacher, denn ein geeignetes Papier-Inlay läßt sich mittels Farbkopierer und/oder eines elektronischen Bildbearbeitungssystems wie ein entsprechendes Originaldokument gestalten und in der geschilderten Weise in eine handelsübliche Folientasche einlaminieren. Gegen eine derartige Komplettfälschung bietet naturgemäß auch der bei der Folientasche nach der einleitend genannten US-PS 3 221 428 verwirklichte Vorschlag, in die Folientasche Chemikalien einzusiegeln, die beim gewaltsamen Öffnen der Folientasche das Dokument unbrauchbar machen, keinen Schutz.

In der EP 0 440 045 A2 wir ein Datenträger, z.B. Wertpapier, mit einem auf der Oberfläche aufgebrachten Hologramm und einem zusätzlichen Druckbild beschrieben. Die Oberfläche des Datenträgers ist im Bereich des Hologramms glatter ausgeführt als in der verbleibenden Fläche.

Der Erfindung liegt die Aufgabe zugrunde, eine Folientasche zu schaffen, die unter der Voraussetzung eines kontrollierten Vertriebsweges Komplettfälschungen einlaminierter oder eingesiegelter Dokumente unmöglich macht.

Diese Aufgabe ist erfindungsgemäß dadurch gelöst, daß mindestens eines der Folienblätter aus einer Mehrschichtfolie besteht, deren äußerste Schicht eine um mindestens 20° C über der Einlaminiertemperatur liegende Erweichungstemperatur hat und die innenseitig ein Prägehologramm trägt, und daß die innerste Schicht des Folienblatts aus einer Schmelzklebefolie mit einer Erweichungstemperatur kleiner oder gleich der Einlaminiertemperatur besteht.

Wenn die vorstehend genannte Mehrschichtfolie lediglich zwei Schichten umfaßt, was in der Regel ausreichend ist, befindet sich also das Prägehologramm auf der Innenseite der äußeren Schicht und die vorstehend genannte Schmelzklebefolie bildet die innere Schicht.

Die vorgeschlagene Lösung hat den Vorteil, daß das als Sicherheitsmerkmal an sich bekannte Prägehologramm mit vertretbarem Aufwand nicht nachahmbar ist und sich auch nicht mittels Farbkopierer und/oder auf fototechnischem weg vortäuschen läßt. Ein eingesiegeltes Dokument läßt sich jedoch unter Verwendung einer Folientasche nach dem vorliegenden Vorschlag in der gewohnten Weise herstellen und bietet das gewohnte Erscheinungsbild.

Prägehologramme, also hochauflösende Beugungsgitter (mit z.B. 1200 Linien/mm) sowie die technischen Verfahren zu ihrer Erzeugung sind bekannt. Für den vorliegenden Zweck eignen sich vor allem Weißlicht-Transmissions-Prägehologramme, die je Folientasche ein einzelnes Bildmotiv oder ein Streumotiv, also zahlreiche sich wiederholende und ggfs. ihrerseits ein bestimmtes Muster bildende Motive, zum Gegenstand haben können.

Herstellungstechnisch vorteilhaft ist es, wenn die Schmelzklebefolie über einen kreuzvernetzten, trägerlosen Acrylatkleber gegen die das Prägehologramm tragende Schicht kaschiert ist (Anspruch 2).

Bevorzugt nimmt das Prägehologramm zumindest den überwiegenden Teil der Fläche des Folienblatts ein (Anspruch 3). Das Prägehologramm nur auf eine kleine Teilfläche des Folienblatts aufzubringen, empfiehlt sich hingegen nicht, denn dann könnte das Prägehologramm z.B. ausgeschnitten und in eine eine handelsübliche Folientasche verwendende Fälschung integriert werden.

Als zusätzliches Sicherheitsmerkmal kann das Prägehologramm eine (nur) maschinenlesbare Kennzeichnung, z.B. in Form eines Barcodes, umfassen (Anspruch 4).

Eine zusätzliche ästhetische Gestaltung oder werbliche Wirkung ist dadurch möglich, daß die äußerste Schicht der Mehrschichtfolie zusätzlich innenseitig konventionell bedruckt wird (Anspruch 5).

Ein einfaches Prägen einer transparenten Folie mit einem die holographische Information enthaltenden Oberflächenrelief reicht für eine Rekonstruktion der holographischen Information, also die visuelle Erkennbarkeit des Bildmotivs, nicht aus. Vielmehr sind hierzu zusätzliche Maßnahmen erforderlich.

Eine erste Möglichkeit besteht darin, die das Prägehologramm tragende Fläche der äußersten Schicht des Folienblatts mit einer Beschichtung aus einem transparenten Material zu versehen, dessen Brechungsindex um mindestens 20 %, vorzugsweise um mindestens 30 %, größer als der Brechungsindex des die äußerste Schicht bildenden Folienwerkstoffs ist (Anspruch 6). Die meisten als Folienwerkstoff in Betracht kommenden Stoffe haben einen Brechungsindex zwischen 1,4 und 1,6. Z.B. hat Polyethylenterephtalat (PET), das wegen seiner Maßhaltigkeit, Transparenz, Oberflächenglätte, Temperatur- und UV-Beständigkeit bevorzugt wird, einen Brechungsindex von 1,55. Die Beschichtung sollte daher einen Brechungsindex von wenigstens 1,8 (vorzugsweise jedoch von mehr als 2,0) haben.

Die Schichtstärke der transparenten Beschichtung richtet sich nach dem Transparenzgrad des betreffenden Werkstoffs und kann zwischen 10 und 100 nm, vorzugsweise zwischen 15 und 25 nm, betragen (Anspruch 7).

Als Beschichtungswerkstoff eignen sich unter anderem zahlreiche Metalloxyde, die aufgedampft oder aufgesputtert werden können. Auch einige Metallsulfide wie z.B. ZnS, CdS und Sb₂S₃ kommen in Betracht. Die Brechungsindices reichen von 1,9 (SiO₂) bis 3,0 (Sb₂S₃). Besonders bewährt hat sich TiO₂ mit einem Brechungsindex von 2,3 (Anspruch 8).

Eine weitere Möglichkeit, eine gute visuelle Erkennbarkeit des in dem Prägehologramm enthaltenden Bildmotivs zu gewährleisten, besteht darin, die das Prägehologramm tragende Fläche der äußersten Schicht des Folienblatts mit einer Beschichtung aus einem reflektierenden Material in einer Deckung zu versehen, die die Lesbarkeit des Dokumentes bei normalen Lichtverhältnissen noch nicht beeinträchtigt (Anspruch 9). Das reflektierende Material kann insbesondere Aluminium sein.

Damit die Transparenz des Folienblatts und damit die Lesbarkeit des Dokumentes sich nicht merklich verschlechtert, sollte die Schichtstärke der reflektierenden Beschichtung kleiner als 20 nm sein (Anspruch 10).

Eine ausreichende Transparenz läßt sich alternativ oder zusätzlich auch dadurch erreichen, daß die Schichtstärke der reflektierenden Beschichtung zumindest in Teilbereichen der Fläche mehr als 20 nm beträgt und daß diese Beschichtung zumindest teilweise aus einem Raster besteht, dessen Deckungsgrad zwischen 15 und 40 % liegt (Anspruch 11). Wenn die reflektierende Beschichtung z.B. aus Aluminium besteht, läßt sich das gewünschte Raster dadurch erzeugen, daß man die zunächst vollflächig aluminiumbedampfte Trägerschicht bzw. Folie unter einer Walze hindurchführt, die das gewünschte Raster als Oberflächenrelief trägt und deren erhabene Strukturen mit 20 %iger Natronlauge befeuchtet sind. Eine nachgeordnete Reinigungswalze entfernt dann das Aluminium, das mit der Natronlauge reagiert hat. Die auf diese Weise durchgeführte Demetallisierung ergibt das gewünschte Raster und hat den weiteren Vorteil, daß die in den transparenten Bereichen dennoch zurückbleibenden, winzigen Aluminiumspuren eine Reproduktion eines in eine derartige Folientasche eingesiegelten Dokumentes beispielsweise mittels Farbkopierer noch weiter erschweren, weil auch die zurückgebliebenen Aluminiumspuren das einfallende Licht reflektieren und damit die Erzeugung eines Bildes des Dokumentes stören.

Die reflektierende Beschichtung braucht lediglich einen Teil der Fläche der äußersten Schicht des Folienblatts zu bedecken (Anspruch 12). Dabei muß die bedeckte Fläche nicht notwendigerweise in sich geschlossen sein sondern die bedeckten Teilflächen, die ihrerseits unterschiedliche Deckungsgrade aufweisen können, können insgesamt zusätzlich ein nicht-holographisches Bildmotiv, ggfs. auch in Halbtondarstellung, erzeugen.

Insbesondere kann die reflektierende Beschichtung auch eine visuell und/oder maschinenlesbare Kennzeichnung enthalten (Anspruch 13).

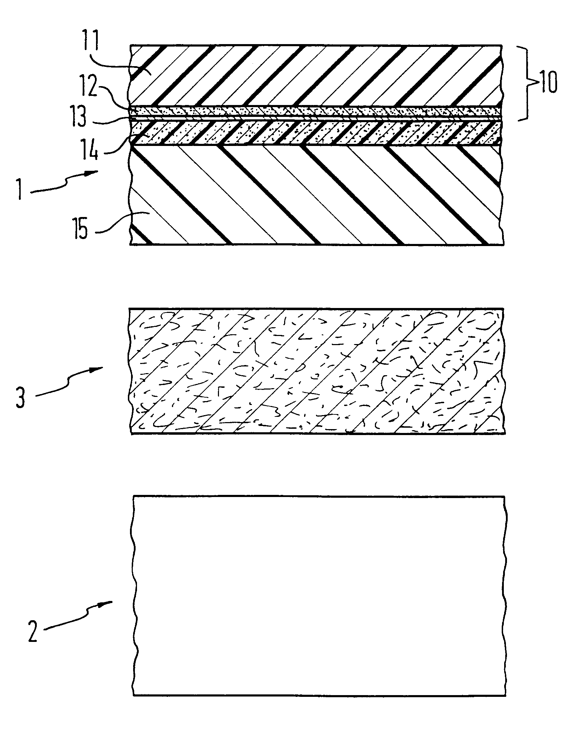

Ein Ausschnitt aus einer Folientasche nach der Erfindung mit eingelegtem Ausweisdokument ist schematich in der Zeichnung dargestellt. Die Folientasche besteht aus dem oberen Folienblatt 1 und dem unteren Folienblatt 2. Dazwichen befindet sich das das Dokument bildende Papier-Inlay 3.

Das obere Folienblatt 1 ist eine im wesentlichen zweischichtige Folie, deren äußere Schicht 10 ihrerseits mehrschichtig ist und eine erste Schicht 11 aus einer z.B. 50 µm starken PET-Folie umfaßt. Innenseitig hat die PET-Folie 11 eine Beschichtung 12 aus einem Acryllack mit einer Stärke von z.B. 5 µm. In diese Acryllackschicht 12 ist ein in der Zeichnung nicht erkennbares Beugungsgitter eingeprägt, das das Hologrammotiv enthält. Das in die Schicht 12 geprägte Relief kann bis an die innenliegende Oberfläche der Schicht 11 heran- oder sogar in diese hineinreichen. Wenn für die äußere Schicht 11 ein Kunststoff verwendet wird, der einen niedrigeren Erweichungspunkt als PET hat, kann auf die Schicht 12 auch verzichtet werden. Als nächstes folgt eine Schicht 13, bei der es sich um eine transparente Beschichtung aus Titandioxyd oder um reflektierende Beschichtung, vorzugsweise eine Aluminiumschicht, jeweils mit einer Schichtstärke von beispielsweise 20 nm, handeln kann. Wenn die Schicht 13 aus Aluminium besteht, kann das Beugungsgitter auch in diese Schicht statt in die Schichten 11 oder 12 geprägt sein. Funktionell sind die Schichten 11 bis 13 jedoch als eine einzige Schicht 10 zu betrachten.

Gegen diese Schicht 10 ist über eine kreuzvernetzte, trägerlose Acrylatkleberschicht 14 eine Schmelzklebefolie 15, die auch als Heißklebefolie oder Meltfilm bezeichnet wird, blasenfrei laminiert. Die Dicke der Acrylatkleberschicht 14 beträgt beispielsweise 20 µm und diejenige der Schmelzklebefolie 15 beispielsweise 100 µm.

Die Acrylatkleberschicht 14 hat den Zweck, die Schmelzklebefolie 15 maschinell gegen die äußere Schicht 10 laminieren zu können. Die Schmelzklebefolie 15 ist notwendig, um das obere Folienblatt 1 gegen das Papier-Inlay 3 und im Randbereich der Folientasche auch gegen das untere Folienblatt 2 mittels eines üblichen Rollenlaminators laminieren zu können, der mit Temperaturen von 120 bis 140° C arbeitet.

Für die äußere Schicht 10, genauer gesagt für die mit dem Prägehologramm versehene Schicht, muß ein Kunststoff mit einer Erweichungstemperatur verwendet werden, die um wenigstens 20° C höher liegt als die Arbeitstemperatur des Rollenlaminators, da andernfalls das Prägehologramm während des Einlaminierens des Papier-Inlays 3 zerstört würde.

Das untere Folienblatt 2 kann gewünschtenfalls den prinzipiell gleichen, bezogen auf das Papier-Inlay 3 jedoch spiegelbildlichen Aufbau wie das obere Folienblatt 1 haben.

Nicht dargestellt ist eine etwaige Bedruckung, die im Konterdruck auf die Innenseite der Schicht 10 aufzubringen ist, sofern von dieser Möglichkeit Gebrauch gemacht wird.

## Patentansprüche

1. Folientasche zur Aufnahme und nachfolgenden Einlaminierung eines Dokumentes (3), z B. eines Ausweisdokumentes, zwischen zwei über einen Falz verbundene, die Tasche bildende Folienblätter (1, 2) aus einem transparenten, thermoplastischen Kunststoff, in einem Laminator **dadurch gekennzeichnet,** daß mindestens eines der Folienblätter aus einer Mehrschichtfolie besteht, deren äußerste Schicht (10) eine um mindestens 20° C über der Arbeitstemperatur des Laminator liegende Erweichungstemperatur hat und die innenseitig ein Prägehologramm trägt, und daß die innerste Schicht des Folienblatts (1) aus einer Schmelzklebefolie (15) mit einer Erweichungstemperatur kleiner oder gleich der Arbeitstemperatur des Laminator besteht.

2. Folientasche nach Anspruch 1, dadurch gekennzeichnet, daß die Schmelzklebefolie (15) über einen kreuzvernetzten, trägerlosen Acrylatkleber (14) gegen die das Prägehologramm tragende Schicht kaschiert ist.

3. Folientasche nach Anspruch 1 oder 2, dadurch gekennzeichnet, daß das Prägehologramm zumindest den überwiegenden Teil der Fläche des Folienblatts (1) einnimmt.

4. Folientasche nach einem der Ansprüche 1 bis 3, dadurch gekennzeichnet, daß das Prägehologramm eine maschinenlesbare Kennzeichnung umfaßt.

5. Folientasche nach einem der Ansprüche 1 bis 4, dadurch gekennzeichnet, daß die äußerste Schicht (10) der Mehrschichtfolie zusätzlich innenseitig konventionell bedruckt ist.

6. Folientasche nach einem der Ansprüche 1 bis 5, dadurch gekennzeichnet, daß die das Prägehologramm tragende Fläche der äußersten Schicht (10) des Folienblatts (1) mit einer Beschichtung (13) aus einem transparenten Material versehen ist, dessen Brechungsindex um mindestens 20 %, vorzugsweise um mindestens 30 %, größer als der Brechungsindex des die äußerste Schicht bildenden Folienwerkstoffs (11, 12) ist.

7. Folientasche nach Anspruch 6, dadurch gekennzeichnet, daß die Schichtstärke der transparenten Beschichtung (13) zwischen 10 und 100 nm, vorzugsweise zwischen 15 und 25 nm, beträgt.

8. Folientasche nach Anspruch 6 oder 7, dadurch gekennzeichnet, daß die transparente Beschichtung aus Titandioxid besteht.

9. Folientasche nach einem der Ansprüche 1 bis 5, dadurch gekennzeichnet, daß die das Prägehologramm tragende Fläche der äußersten Schicht (10) des Folienblatts (1) mit einer Beschichtung (13) aus einem reflektierenden Material in einer Deckung versehen ist, die die Lesbarkeit des Dokumentes bei normalen Lichtverhältnissen noch nicht beeinträchtigt.

10. Folientasche nach Anspruch 9, dadurch gekennzeichnet, daß die Schichtstärke der reflektierenden Beschichtung (13) kleiner als 20 nm ist.

11. Folientasche nach Anspruch 9 oder 10, dadurch gekennzeichnet, daß die Schichtstärke der reflektierenden Beschichtung (13) mehr als 20 nm beträgt und daß die reflektierende Beschichtung zumindest teilweise aus einem Raster besteht, dessen Deckungsgrad zwischen 15 und 40% liegt.

12. Folientasche nach einem der Ansprüche 9 bis 11, dadurch gekennzeichnet, daß die reflektierende Beschichtung (13) lediglich einen Teil der Fläche der äußersten Schicht des Folienblatts bedeckt.

13. Folientasche nach einem der Ansprüche 9 bis 12, dadurch gekennzeichnet, daß die reflektierende Beschichtung (13) eine visuell und/oder maschinenlesbare Kennzeichnung enthält.

## Claims

1. A foil case for receiving a document (3), for example an identity document, and subsequent lamination therein, between two foil sheets (1, 2) of a transparent thermoplastic material which are joined by way of a fold and which form the case, in a laminator, characterised in that at least one of the foil sheets comprises a multi-layer foil whose outermost layer (10) has a softening temperature at least 20°C above the operating temperature of the laminator and which on the inside carries an embossing hologram, and that the innermost layer of the foil sheet (1) comprises a melt adhesive foil (15) with a softening temperature that is lower than or equal to the operating temperature of the laminator.

2. A foil case according to claim 1 characterised in that the melt adhesive foil (15) is laminated against the layer carrying the embossing hologram by way of a cross-linked, carrier-less acrylate adhesive (14).

3. A foil case according to claim 1 or claim 2 characterised in that the embossing hologram occupies at least the predominant part of the surface area of the foil sheet (1).

4. A foil case according to one of claims 1 to 3 characterised in that the embossing hologram includes a machine-readable identification.

5. A foil case according to one of claims 1 to 4 characterised in that the outermost layer (10) of the multi-layer foil is additionally conventionally printed upon at the inside.

6. A foil case according to one of claims 1 to 5 characterised in that the surface, which carries the embossing hologram, of the outermost layer (10) of the foil sheet (1) is provided with a coating (13) comprising a transparent material whose refractive index is at least 20% and preferably at least 30% greater than the refractive index of the foil material (11, 12) forming the outermost layer.

7. A foil case according to claim 6 characterised in that the layer thickness of the transparent coating (13) is between 10 and 100 nm, preferably between 15 and 25 nm.

8. A foil case according to claim 6 or claim 7 characterised in that the transparent coating comprises titanium dioxide.

9. A foil case according to one of claims 1 to 5 characterised in that the surface, carrying the embossing hologram, of the outermost layer (10) of the foil sheet (1) is provided with a coating (13) of a reflecting material in a cover which still does not impair readability of the document under normal lighting conditions.

10. A foil case according to claim 9 characterised in that the layer thickness of the reflecting coating (13) is less than 20 nm.

11. A foil case according to claim 9 or claim 10 characterised in that the layer thickness of the reflecting coating (13) is more than 20 nm and that the reflecting coating at least partially comprises a grid whose degree of covering is between 15 and 40%.

12. A foil case according to one of claims 1 to 11 characterised in that the reflecting coating (13) covers only a part of the surface area of the outermost layer of the foil sheet.

13. A foil case according to one of claims 9 to 12 characterised in that the reflecting coating (13) contains a visually and/or machine-readable identification.

## Revendications

1. Pochette destinée à recevoir, et à plastifier ultérieurement dans un appareil de plastification, un document (3), par un exemple un document d'identité, entre deux feuilles (1, 2) en résine synthétique thermoplastique transparente réunies par un pli et formant la pochette, caractérisée en ce qu'au moins une des feuilles est composée d'un stratifié multicouches, dont la couche extérieure extrême (10) a une température de ramollissement supérieure d'au moins 20°C à la température de travail de l'appareil de plastification et qui porte un hologramme estampé sur sa face interne, et en ce que la couche interne extrême de la feuille(1) est composée d'une couche de colle fusible (15) possédant une température de ramollissement inférieure ou égale à la température de travail de l'appareil de plastification.

2. Pochette selon la revendication 1, caractérisée en ce que la couche de colle fusible (15) est appliquée contre la couche portant l'hologramme estampé par l'intermédiaire d'une colle acrylique (14) sans support, réticulée.

3. Pochette selon la revendication 1 ou 2, caractérisée en ce que l'hologramme estampé occupe au moins la partie principale de la surface de la feuille(1).

4. Pochette selon une des revendications 1 à 3, caractérisée en ce que l'hologramme estampé comprend un marquage lisible par une machine.

5. Pochette selon une des revendications 1 à 4, caractérisée en ce qu'en outre, la couche extérieure extrême (10) de la feuille multicouche est imprimée d'une façon classique sur sa face interne.

6. Pochette selon une des revendications 1 à 5, caractérisée en ce que la surface de la couche extérieure extrême (10) de la feuille(1) qui porte l'hologramme estampé est munie d'un revêtement (13) en une matière transparente dont l'indice de réfraction est supérieur d'au moins 20%, de préférence d'au moins 30 %, à l'indice de réfraction de la matière stratifiée (11, 12) qui forme la couche externe extrême.

7. Pochette selon la revendication 6, caractérisée en ce que la force de couche du revêtement transparent (13) est d'entre 10 et 100 nm, de préférence d'entre 15 et 25 nm.

8. Pochette selon la revendication 6 ou 7, caractérisée en ce que le revêtement transparent est en dioxyde de titane.

9. Pochette selon une des revendications 1 à 5 caractérisée en ce que la surface de la couche externe (10) de la feuille(1) qui porte l'hologramme estampé est munie d'un revêtement en matière réfléchissante avec un degré de recouvrement qui ne détériore pas encore la lisibilité du document dans des conditions d'éclairage normales.

10. Pochette selon la revendication 9, caractérisée en ce que la force de couche du revêtement réfléchissant (13) est inférieure à 20 nm.

11. Pochette selon la revendication 9 ou 10, caractérisée en ce que la force de couche du revêtement réfléchissant (13) est de plus de 20 nm et en ce que le revêtement réfléchissant est composé, au moins partiellement, d'une trame dont le degré de recouvrement est compris entre 15 et 40%.

12. Pochette selon une des revendications 9 à 11, caractérisée en ce que le revêtement réfléchissant (13) couvre seulement une partie de la surface de la couche externe extrême de la feuille.

13. Pochette selon une des revendications 9 à 12, caractérisée en ce que le revêtement réfléchissant (13) renferme un marquage lisible visuellement et/ou par une machine.
